# NEUE EUROPÄISCHE PATENTSCHRIFT

(11) **EP 2 895 763 B2**
(45) Veröffentlichungstag und Bekanntmachung des Hinweises auf die Entscheidung über den Einspruch: **25.03.2026**
(45) Hinweis auf die Patenterteilung: 09.05.2018
(21) Anmeldenummer: 13762500.0
(22) Anmeldetag: 16.09.2013
(51) Int. Cl.: F16D 65/00

(54) **BREMSTRÄGER**
BRAKE CARRIER
SUPPORT DE FREIN

(30) Priorität: 17.09.2012 DE 102012108686
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: LIPP, Thomas, 82223 Eichenau (DE); ADAMCZYK, Philipp, 87677 Stöttwang (DE); SCHEUFFLER, Christian, 80807 München (DE)
(74) Vertreter: Specht, Peter
(86) Internationale Anmeldenummer: PCT/EP2013/069127
(87) Internationale Veröffentlichungsnummer: WO 2014/041162

(56) Entgegenhaltungen:
- EP-A1- 2 682 631
- EP-A1- 2 767 726
- EP-B1- 1 903 242
- WO-A1-2008/079086
- DE-A1- 102008 003 526
- DE-A1- 102008 027 049
- DE-A1- 4 236 693
- DE-B3- 102011 103 963
- DE-B4- 19 540 757
- DE-U1- 202007 018 505
- JP-S- 1 391 934
- US-A1- 2001 032 757
- US-A1- 2009 057 076

## Beschreibung

Die vorliegende Erfindung betrifft einen Bremsträger für eine Scheibenbremse nach dem Oberbegriff des Anspruchs 1.

Derartige Bremsträger für Scheibenbremsen - bekannt z.B. aus der gattungsgemäßen DE 10 2008 027 049 A1 oder der US 2009/0057076 A1 - werden üblicherweise einstückig durch ein Urformverfahren hergestellt, vorzugsweise im Sandgießverfahren, wobei als Werkstoff vorzugsweise Gusseisen mit Kugelgraphit bzw. Sphäroguss eingesetzt wird. Das so entstandene Gussrohteil wird anschließend spanend fertig bearbeitet, so dass ein einbaubarer Bremsträger entsteht. Derartige einstückige Bremsträger aus Sphäroguss nach dem Stand der Technik - siehe zum Stand der Technik auch die der DE 10 2008 003 526 A1 - haben sich grundsätzlich bewährt, weisen aber einige Nachteile auf, die sich insbesondere im Anwendungsbereich der schweren Nutzfahrzeuge negativ auswirken.

So weisen die Bremsträger nach dem Stand der Technik auf Grund der Festigkeitsanforderungen an den Bremsträger sowie auf Grund eines beengten Bauraumes für den Bremsträger und der daraus resultierenden, bisherigen geometrischen Gestaltung ein Gewicht auf, das weiteres Optimierungspotential bieten sollte.

Es ist also wünschenswert - insbesondere auch im Hinblick auf die Nutzlastoptimierung eines Nutzfahrzeuges - einen gewichts- und damit auch kostenoptimierten Bremsträger insbesondere für Nutzfahrzeugbremsen bereitzustellen, der die vorgenannten Nachteile überwindet.

Der Erfindung liegt daher die Aufgabe zu Grunde, einen gewichts- und damit auch kostenoptimierten Bremsträger zu schaffen.

Die Erfindung löst diese Aufgabe durch den Gegenstand des Anspruchs 1.

Die optimierte Anordnung der Verstärkungsrippe mit dem zur Mitte hin jeweils von den äußeren Enden her stetig steigendem Verlauf des Konturzugs der

Verstärkungsrippe zu einer besonders homogenen, also betragsmäßig gleichmäßigen Verformung der bremsscheibenabgewandten Seite des Bremsträgers bei Belastung. Daraus resultierend verringern sich Belastungs-Spannungsspitzen insbesondere bei Betriebsbremsungen.

Die vorteilhafte Gestaltung der Verstärkungsrippe eröffnet also die Möglichkeit - sofern die gleiche Verformung wie bei einem Bremsträger nach dem Stand der Technik zugelassen wird- im Vergleich zu Bremsträgern nach dem Stand der Technik Wandstärken im Bereich der befestigungsflanschabgewandten Seite des Bremsträgers gezielt zu reduzieren, da sich auch bei entsprechenden Verformungen keine erhöhten Spannungsspitzen ergeben und es so möglich wird, gezielt Werkstoff an der befestigungsflanschabgewandten Seite des Bremsträgers einzusparen, um so einen gewichts- und kostenoptimierten Bremsträger zu erhalten.

Vorteilhafte Ausführungen des erfindungsgemäßen Bremsträgers sind den Unteransprüchen zu entnehmen.

Ausführungsbeispiele eines erfindungsgemäßen Bremsträgers sind in den Zeichnungen dargestellt und werden im Folgenden näher beschrieben, wobei auch weitere Vorteile erfindungsgemäßer Ausführungen erläutert werden. Es zeigen:
- Figur 1:: eine räumliche Darstellung eines Bremsträgers nach dem Stand der Technik;
- Figur 2:: eine Vorderansicht eines Bremsträgers nach dem Stand der Technik;
- Figur 3:: eine räumliche Ansicht eines erfindungsgemäßen Bremsträgers;
- Figur 4:: eine Vorderansicht eines erfindungsgemäßen Bremsträgers.

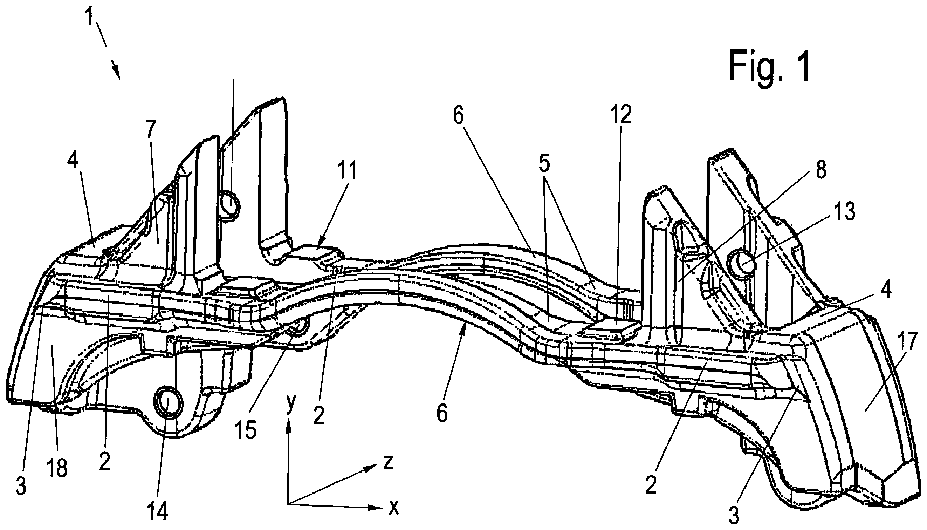

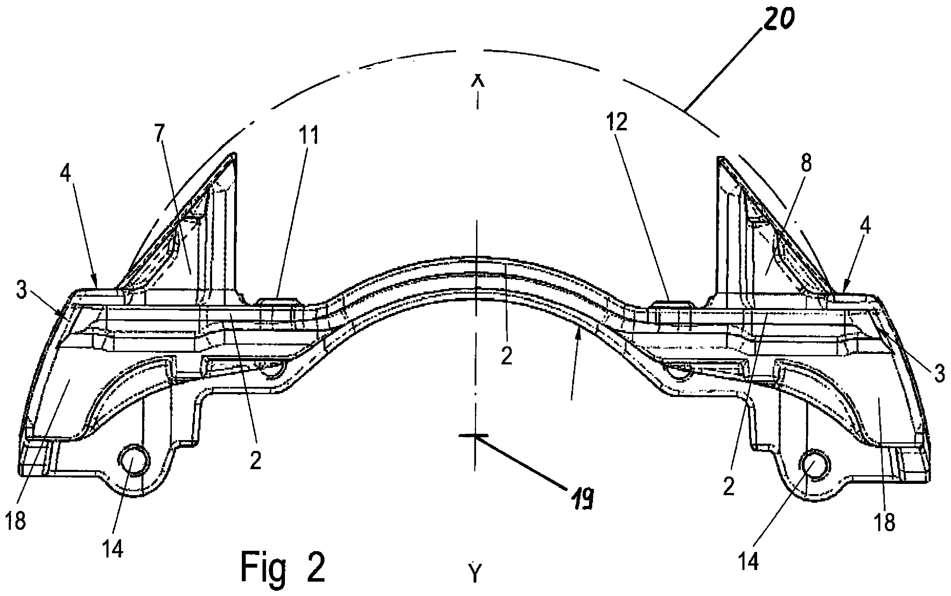

In den Figuren 1 und 2 ist jeweils ein bekannter Bremsträger 1 nach dem Stand der Technik dargestellt. Bis auf eine Rippe ist die nachfolgende Beschreibung auch auf den erfindungsgemäßen Bremsträger übertragbar.

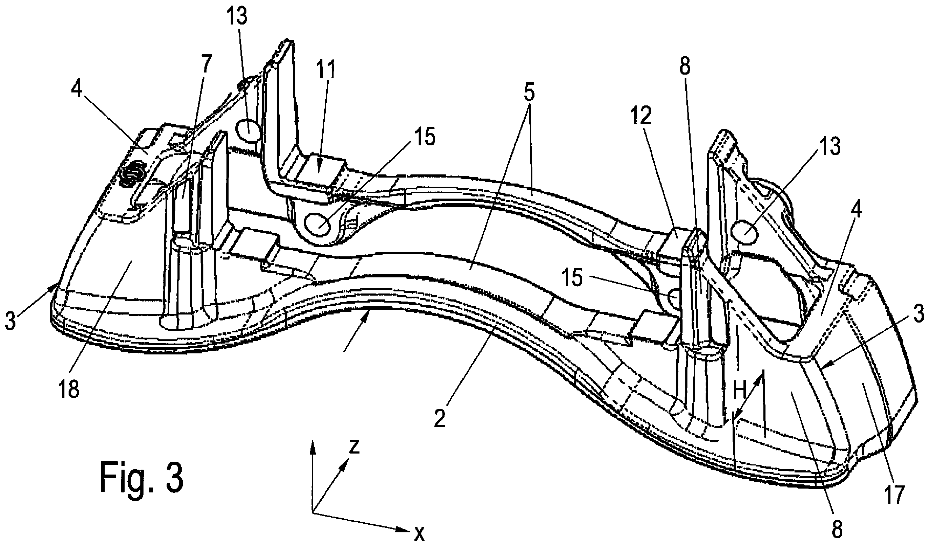

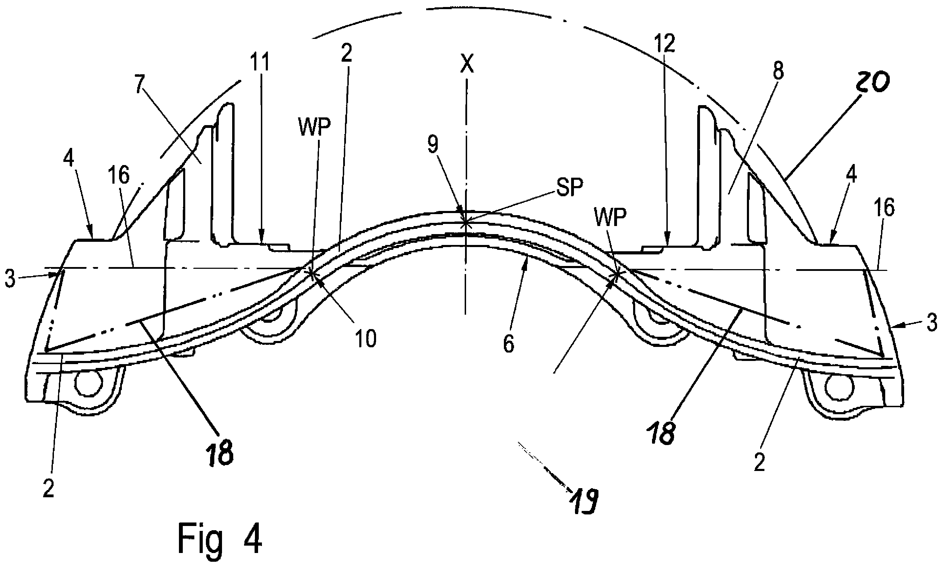

Nachfolgend werden Begriffe wie "oben", "unten", "rechts", "links" usw. verwendet, welche sich auf die Ausrichtung des Bremsträgers entsprechend zu Fig. 4 beziehen. Ein kartesisches Koordinatensystem in Fig.1 und 3 dient der weiteren Orientierung.

Der Bremsträger 1 überspannt bzw. umgreift rahmenartig als Scheibenumgriff 5 bzw. als Scheibenrahmen einen in Bezug auf die Fahrzeug- Radachse/Bremsscheibendrehachse 19 axial äußeren Abschnitt einer drehfest mit einer drehbaren Fahrzeugachse verbundenen Bremsscheibe 20 (gestrichelt schematisch angedeutet). Parallel zur Bremsscheibe weist er beidseits zu dieser jeweils einen bogenartigen Nabenschwung 6 auf. Die beiden Nabenschwünge 6 sind parallel zur Bremsscheibendrehachse über Rahmenteile 17 miteinander verbunden. Der einen der Nabenschwünge liegt auf eine Befestigungsflanschseite des Bremsträgers (in Fig. 1 die hintere Seite), so dass er an der Fahrzeugachse stabilisiert wird.

Der Bremsträger 1 weist ferner auf jeder Seite der Bremsscheibe zwei in den Scheibenumgriff 5 integrierte, von den Rahmenteile 17 im Bereich einer (definitionsgemäß nachfolgend als Grundfläche 4 bezeichneten) Fläche bzw. Ebene 4 nach oben vorkragende sowie hier symmetrisch zu jeweils einem der Nabenschwünge 6 angeordnete und in einer Ebene parallel zur Bremsfläche der Bremsscheibe i Umfangrichtung hintereinander angeordnete Trägerhörner 7, 8 auf, die zur Abstützung der beiden Bremsbeläge dienen.

Die Trägerhörner 7, 8 bilden mit unteren Stützstellen 11, 12 des Bremsträgers jeweils einen von zwei Bremsbelagschächten aus, die jeweils eine Belagträgerplatte eines Bremsbelags (nicht dargestellt) in Umfangsrichtung, d.h. einlaufseitig und auslaufseitig sowie nach unten hin abstützen.

Das in Bezug auf die Fahrzeug-Radachse/Bremsscheibendrehachse in Axialrichtung angeordnetes Rahmenteil 17 des Scheibenumgriffs 5 erweitert sich in negativer y-Richtung in Bezug auf das Koordinatensystem der Fig. 1, so dass sich ausgehend vom Nabenschwung 6 jeweils bis zum Außenrand 3 der befestigungsflanschabgewandten Seite des Bremsträgers ein Abschnitt mit einer im Wesentlichen dreieckförmigen Geometrie/Dreieck 18 insbesondere auf einer befestigungsflanschabgewandten Seite des Bremsträgers ergibt.

Dabei bildet der Rahmenteil 17 bzw. der Außenrand 3 die kürzeste Seite eines gedachten Dreiecks 18. Der Konturzug der Verstärkungsrippe 2 liegt im Bereich der dreieckförmigen Geometrie -bezogen auf das Koordinatensystem in Fig. 1- im Bereich betragsmäßig größerer y-Werte.

Der Bremsbelag stützt sich in y-Richtung -bezogen auf das Koordinatensystem in Fig. 1- auf jeweils zwei Stützstellen 11, 12 auf dem Bremsträger 1 ab, die gleichzeitig den Abstand des Bremsbelags zur Fahrzeugachse definieren. Zur Befestigung des Bremsträgers 1 an einem Befestigungsflansch (nicht dargestellt) an der Fahrzeugachse weist der Bremsträger 1 befestigungsflanschseitig Befestigungsstellen 14, 15 auf, über die der Bremsträger 1 mit dem Befestigungsflansch verschraubt ist.
An Befestigungsstellen 13 werden Lagerbolzen für einen Schiebesattel befestigt (hier nicht dargestellt). Als dies ist dem Fachmann an sich bekannt und muss hier nicht näher beschrieben werden.

Der Bremsträger 1 der Fig. 2 (und auch 4) ist ein in Bezug auf die Symmetrieachse X - Y (siehe Fig. 2) vorzugsweise symmetrisches Bauteil. Er weist zur Stabilisierung eine Verstärkungsrippe 2 auf der befestigungsflanschabgewandten Außenseite auf (die sich parallel zur Bremscheibendrehachse 19 erstreckt).

Die Verstärkungsrippe 2 weist einen über die gesamte Fläche der befestigungsflanschabgewandten Seite des Bremsträgers 1 durchgehenden Konturzug auf.

Der Konturzug der Verstärkungsrippe 2 beginnt jeweils an zwei Enden am Außenrand 3 des Bremsträgers 1 und verläuft zunächst parallel unter oder auf gleicher Ebene einer konsolenartigen Grundfläche 4 eines Scheibenumgriffs 5 in Bezug auf das Koordinatensystem in Fig. 1 im Bereich betragsmäßig größerer y-Werte nach innen bzw. zur Mitte hin.

Der Konturverlauf der Verstärkungsrippe 2 folgt dann dem Nabenschwung 6 an dessen Außenseite (d.h. an der von der Bremsscheibe abgewandten Außenseite) bis zur mittigen Symmetrieachse X - Y. Die Verstärkungsrippe 2 ist zur Symmetrieachse X - Y spiegelsymmetrisch ausgebildet.

Durch den Konturverlauf der Verstärkungsrippe 2 - an den Außenrändern 3 des Bremsträgers 1 im Wesentlichen parallel zur konsolenartigen Grundfläche 4 des Scheibenumgriffs 5 - ergeben sich insbesondere im Bereich der Trägerhörner 7, 8 für die Bremsbeläge (nicht dargestellt) Spannungsspitzen, die aus dem Steifigkeitssprung des Bremsträgers 1 jeweils unterhalb und oberhalb der Verstärkungsrippe 2 herrühren, die verringert werden sollen.

Begegnet wird diesen Spannungsspitzen durch entsprechende Wandstärkeaufdickungen an der Verstärkungsrippe 2 z.B. im Bereich der Trägerhörner 7, 8.

Bei Belastungen des Bremsträgers 1, die zu einer parallelogrammartigen Verformung der Grundfläche 4 des Scheibenumgriffs 5 führen, trägt die Verstärkungsrippe 2 auf Grund ihrer Geometrie und ihres Konturzuges nicht wesentlich zur Aussteifung des Bremsträgers 1 im Bereich der dreieckigen Geometrie 18 bei, so dass in einem solchen Belastungsfall die Spannungskonzentration im Bremsträger 1 ebenfalls erhöht ist.

Im Hinblick auf die Optimierung von mechanischer Spannung, Verformung und Gewicht des Bremsträgers 1 scheiden einfache Maßnahmen zur Aussteifung des Bremsträgers 1, wie das Hinzufügen von zusätzlichem Werkstoff, auf Grund der Bauraumverhältnisse auf der befestigungsflanschabgewandten Seite des Bremsträgers 1 aus.

In Fig 3 bzw. 4 ist ein erfindungsgemäßer Bremsträger 1 dargestellt. Die Grundgeometrie eines erfindungsgemäßen Bremsträgers 1 entspricht im Wesentlichen der eines Bremsträgers 1 nach dem Stand der Technik. Wesentlicher Unterschied eines erfindungsgemäßen Bremsträgers 1 zu einem Bremsträger 1 nach dem Stand der Technik ist die Geometrie des Konturverlaufs der Verstärkungsrippe 2 sowie der Lageanordnung der Verstärkungsrippe 2 auf der befestigungsflanschabgewandten Seite des Bremsträgers 1.

Die Verstärkungsrippe 2 ist zunächst wiederum zur Symmetrieachse X - Y spiegelsymmetrisch ausgebildet.

Der Konturzug der Verstärkungsrippe 2 beginnt - anders als bei Bremsträgern nach dem Stand der Technik - jeweils in der unteren Ecke des Außenrandes 3 des Bremsträgers 1, also in Bezug auf das Koordinatensystem in Fig. 1 im Bereich betragsmäßig kleiner y-Werte.

Anders ausgedrückt weist die Verstärkungsrippe zwei voneinander abgewandte Enden auf, welche vorteilhaft sowie vorzugsweise jeweils an den äußeren unteren Ecken des Bremsträgers 1 ausgebildet sind, wobei sich die Verstärkungsrippe 2 ausgehend von diesen Enden jeweils bis zu einem zentralen Scheitelpunkt 9 an der Symmetrieachse X - Y des Bremsträgers 1 erstreckt, an dem sich das Vorzeichen des Steigungsgradienten des Konturzuges ändert. Diese Anordnung trägt zur Verringerung von Spannungsspitzen bei.

Vorzugsweise weist der Bremsträger ferner zwei symmetrisch zur Symmetrieachse X - Y befindliche Wendepunkte auf, an denen sich jeweils das Vorzeichen des Krümmungsgradienten des Konturzugs ändert.

Bevorzugt beginnt der Konturzug der Verstärkungsrippe 2 entsprechend in der unteren Hälfte - insbesondere ganz am unteren Rand - der dreieckförmigen Geometrie 18, die dadurch gebildet wird, dass sich der Scheibenumgriff 5 an den Außenrändern 3 des Bremsträgers 1 in Richtung kleinerer y-Werte in Bezug auf das Koordinatensystem und in Bezug auf die Grundfläche 4 in Fig. 3. erweitert, wobei der Scheibenumgriff 5 in seiner Ausdehnung in Richtung kleinerer y-Werte etwa im Bereich, an dem der Nabenschwung 6 die Ebene der Grundfläche 4 verlässt, die Grundfläche 4 erreicht.

Die Verstärkungsrippe 2 des erfindungsgemäßen Bremsträgers 1 erinnert in ihrem Konturverlauf an den Graphen der Gaußschen Normalverteilungsfunktion (Gaußsche "Glockenkurve").

Es handelt sich dabei also um einen Konturzug mit zur mittigen Symmetrieachse X/Y jeweils von außen zur Mitte hin stetig steigendem Verlauf mit einem mittigen Scheitelpunkt 9.

Der Scheitelpunkt 9 des Konturzugs der Verstärkungsrippe 2 fällt mittig mit dem Scheitelpunkt des Nabenschwunges 6 zusammen. Darüber hinaus weist der Konturzug zwei symmetrisch zur Symmetrieachse befindliche Wendepunkte 10 auf, an denen sich das Vorzeichen des Krümmungsgradienten des Konturzugs ändert.

Die äußeren Startpunkte bzw. Enden der Verstärkungsrippe 2 des erfindungsgemäßen Bremsträgers 1 liegen in Bezug auf den Verlauf des Konturzugs im Bereich der dreieckförmigen Geometrie 18 um mindestens 15 mm, vorzugsweise um weniger als 25 mm unterhalb der Grundfläche 4 des Scheibenumgriffs 5 und verläuft mit positiven Steigungsgradienten stetig steigend, um dann nach Wechsel des Vorzeichens des Krümmungsgradienten im Wendepunkt 10 dem Nabenschwung 6 zu folgen, bis zu einem zentralen Scheitelpunkt 9, der mit der Symmetrieachse X - Y des Bremsträgers 1 zusammenfällt.

Der Konturverlauf der Verstärkungsrippe 2 ist jeweils spiegelbildlich zur Symmetrieachse X - Y.

Besonders vorteilhaft ist zunächst, dass der durchgehende Konturzug von zwei äußeren Enden zu einer mittigen Symmetrieachse hin einen jeweils vstetig steigenden Verlauf aufweist.

Dabei liegen erfindungsgemäß die zwei Enden der Versteifungsrippe 2 jeweils an äußeren unteren Ecken des Bremsträgers. Die Verstärkungsrippe 2 erstreckt sich ausgehend von diesen Enden jeweils bis zu einem zentralen Scheitelpunkt 9 an einer Symmetrieachse X - Y des Bremsträgers 1, an dem sich das Vorzeichen des Steigungsgradienten des Konturzuges ändert.

Die Verstärkungsrippe ist in Bezug auf die Bremsscheibe in axialer Richtung wiederum erhaben auf der befestigungsflanschabgewandten Seite des Bremsträgers 1 angeordnet.

Dabei weist die Verstärkungsrippe 2 eine axiale Höhe "H" über den gesamten Konturzug auf, wobei die Höhe "H" mindestens 5 mm, vorzugsweise zwischen 7 und 12 mm beträgt. Der Querschnitt weist somit eine größere Querschnittsfläche auf als die Verstärkungsrippe 2 eines Bremsträgers 1 nach dem Stand der Technik.

Die vergrößerte Querschnittsfläche der Verstärkungsrippe 2 führt in Verbindung mit dem stetig steigenden Verlauf des Konturzugs der Verstärkungsrippe 2 jeweils von außen bis zur Mitte zu einer homogenen, also betragsmäßig verhältnismäßig gleichmäßigen Verformung des Bremsträgers 1 bei Belastung. Daraus resultierend, weist der Bremsträger keine signifikanten Spannungsspitzen auf.

Vorteilhaft in Hinsicht auf die Vermeidung von Spannungen ist ferner, dass der die Rippe aufweisende Nabenschwung 6 wiederum von einer Symmetrieachse aus nach außen hin jeweils in einen Abschnitt mit sich nach außen hin aufweitender dreieckförmiger Geometrie 18 übergeht, wobei die äußeren Enden der Verstärkungsrippe 2 mindestens 15 mm, vorzugsweise 20 mm und besonders bevorzugt bis zu 25 mm unterhalb der Grundfläche 4 des Scheibenumgriffs 5 liegen, auf welcher die Bremsträgerhörner aufbauen bzw. an welcher diese ansetzen. Die beiden voneinander abgewandten äußeren Enden der Rippe 2 liegen somit vorteilhaft deutlich tiefer als nach dem bekannten Stand der Technik.

Dementsprechend kann -wie bei den Bremsträgern nach dem Stand der Technik erforderlich- auf entsprechende Wandstärkeaufdickungen in den betreffenden Bereichen des Scheibenumgriffs 5 mit Steifigkeitssprüngen und entsprechend hohen Spannungsspitzen verzichtet werden.

Die erfindungsgemäße Gestaltung der Verstärkungsrippe 2 eröffnet also die Möglichkeit -sofern die gleiche Verformung wie bei einem Bremsträger nach dem Stand der Technik zugelassen wird- im Vergleich zu Bremsträgern nach dem Stand der Technik Wandstärken im Bereich der befestigungsflanschabgewandten Seite des Bremsträgers 1 gezielt zu reduzieren, da sich auch bei entsprechenden Verformungen keine erhöhten Spannungsspitzen ergeben und es so möglich wird, gezielt Werkstoff an der befestigungsflanschabgewandten Seite des Bremsträgers einzusparen, um so einen gewichts- und kostenoptimierten Bremsträger 1 zu erhalten.

Anders herum kann ein erfindungsgemäßer Bremsträger 1 mit höheren zyklisch wirkenden Kräften beaufschlagt werden, ohne dabei Lebensdauereinbußen hinnehmen zu müssen. Dadurch ergibt sich eine mögliche höhere Leistung eines erfindungsgemäßen Bremsträger 1 bei einem optimierten Leistungsgewicht.

Die vorteilhafte Geometrie eines erfindungsgemäßen Bremsträgers 1 lässt sich besonders einfach über ein Gießverfahren fertigungstechnisch darstellen. Bevorzugt wird der erfindungsgemäße Bremsträger 1 aus einem duktilen Gusswerkstoff, wie beispielsweise Gusseisen mit Kugelgraphit hergestellt.

### Bezugszeichenliste

- 1: Bremsträger
- 2: Verstärkungsrippe
- 3: Außenrand
- 4: Grundfläche
- 5: Scheibenumgriff
- 6: Nabenschwung
- 7: Trägerhorn
- 8: Trägerhorn
- 9: Scheitelpunkt
- 10: Wendepunkt
- 11: Stützstelle
- 12: Stützstelle
- 13: Befestigungsstelle
- 14: Befestigungsstelle
- 15: Befestigungsstelle
- 16: Linie
- 17: Rahmenteil
- 18: Dreieckförmige Geometrie
- 19: Bremsscheibendrehachse
- 20: Bremsscheibe

## Patentansprüche

1. Einstückiger - vorzugsweise durch ein Urformverfahren hergestellter - Bremsträger (1) für eine eine Bremsscheibe aufweisende Scheibenbremse eines Fahrzeugs,
a. wobei der Bremsträger (1) einen rahmenartigen Scheibenumgriff (5) aufweist, der wiederum zwei zueinander parallele Nabenschwünge (6) aufweist, die parallel zur Bremsscheibe ausgerichtet sind und zwei diese parallel zu einer Bremscheibendrehachse (19) verbindende Rahmenteile (17),
b. wobei der Bremsträger (1) ferner zumindest auf seiner befestigungsflanschabgewandten Seite - in Bezug auf den Scheibenumgriff (5) - nach außen hin eine in Bezug auf eine Bremsscheibendrehachse (19) von dem einen der Nabenschwünge (6) vorstehende Versteifungsrippe (2) aufweist, die als durchgehender Konturzug ausgebildet ist,
**dadurch gekennzeichnet,**
c. **dass** die Verstärkungsrippe (2) zumindest auf der befestigungsflanschabgewandten Seite des Bremsträgers in Bezug auf eine Bremsscheibendrehachse (19) in axialer Richtung von dem Bremsträger und dem einen der Nabenschwünge (6) vorsteht, wobei die axial vorstehende Versteifungsrippe (2), die als durchgehender Konturzug ausgebildet ist, der von zwei äußeren Enden zu einer mittigen Symmetrieachse hin einen jeweils stetig steigenden Verlauf aufweist, wobei
d.
die zwei Enden der Versteifungsrippe (2) jeweils an den äußeren unteren Ecken des Bremsträgers (1) liegen und dass sich die Verstärkungsrippe (2) ausgehend von diesen Enden jeweils bis zu einem zentralen Scheitelpunkt (9) an einer Symmetrieachse X - Y des Bremsträgers (1) erstreckt, an dem sich das Vorzeichen des Steigungsgradienten des Konturzuges ändert.

2. Bremsträger nach Anspruch 1, **dadurch gekennzeichnet, dass** er zwei symmetrisch zur Symmetrieachse X - Y befindliche Wendepunkte (10) aufweist, an denen sich jeweils das Vorzeichen des Krümmungsgradienten des Konturzugs ändert.

3. Bremsträger (1) nach einem der vorstehenden Ansprüche, **dadurch gekennzeichnet, dass** der Konturzug der Verstärkungsrippe (2) zur Symmetrieachse X - Y symmetrisch ist.

4. Bremsträger (1) nach einem der vorgenannten Ansprüche, **dadurch gekennzeichnet, dass** die Höhe "H" der Verstärkungsrippe (2) mindestens 5 mm, vorzugsweise 7 mm und besonders bevorzugt maximal bis zu 12 mm beträgt.

5. Bremsträger (1) nach einem der vorgenannten Ansprüche, **dadurch gekennzeichnet,** das der die Rippe aufweisende Nabenschwung (6) von einer Symmetrieachse aus nach außen hin jeweils in einen Abschnitt mit sich nach außen hin aufweitender dreieckförmiger Geometrie (18) übergeht, wobei die äußeren Enden der Verstärkungsrippe (2) mindestens 15 mm, vorzugsweise 20 mm und besonders bevorzugt weniger als 25 mm unterhalb einer Grundfläche (4) des Scheibenumgriffs (5) liegen, auf welcher die Bremsträgerhörner aufbauen bzw. an welcher diese ansetzen.

6. Bremsträger (1) nach einem der vorgenannten Ansprüche, **dadurch gekennzeichnet, dass** der Bremsträger (1) durch ein Gießverfahren hergestellt ist.

7. Bremsträger (1) nach einem der vorgenannten Ansprüche, **dadurch gekennzeichnet, dass** der Bremsträger (1) aus einem duktilen Gusswerkstoff hergestellt ist.

8. Bremsträger (1) nach einem der vorgenannten Ansprüche, **dadurch gekennzeichnet, dass** der Bremsträger (1) aus Gusseisen mit Kugelgraphit hergestellt ist.

## Claims

1. One-piece brake carrier (1) - preferably produced by a deformation process - for a disc brake of a vehicle comprising a brake disc,
a. wherein the brake carrier (1) comprises a frame-like disc surround (5) which in turn has two mutually parallel hub arches (6) which are directed parallel to the brake disc, and two connecting frame elements (17) parallel to a brake disc rotation axis (19),
b. wherein in addition, at least on its side facing away from a fixing flange, the brake carrier (1) has a reinforcing rib (2) which projects outward - relative to the disc surround (5) - in relation to a brake disc rotation axis (19) from one of the hub arches (6), which rib is in the form of a continuous contour line,
**characterised in that**
c. at least on the side of the brake carrier facing away from the fixing flange of the brake carrier, the reinforcing rib (2) projects in the axial direction, relative to a brake disc rotation axis (19), from the brake carrier and from the said one of the hub arches (6), and the said axially projecting reinforcing rib (2), which is in the form of a continuous contour line, preferably has a smoothly rising shape from its two outer ends to a central axis of symmetry.
d. the two ends of the reinforcing rib (2) are located respectively at the outer lower corners of the brake carrier (1), and **in that** the reinforcing rib (2) extends from these ends respectively to a central apex (9) on a symmetry axis X-Y of the brake carrier (1), at which the sign of the curve gradient of the contour line changes.

2. Brake carrier according to Claim 1, **characterised in that** the two ends of the reinforcing rib (2) are in each case in contact with the outer lower corners of the brake carrier (1), and starting from the said ends the reinforcing rib (2) extends up to a central peak (9) located on a symmetry axis X-Y of the brake carrier (1), at which the sign of the slope gradient of the continuous contour changes.

3. Brake carrier according to any of the preceding claims, **characterised in that** the continuous contour of the reinforcing rib (2) is symmetrical relative to the symmetry axis X-Y.

4. Brake carrier (1) according to any of the preceding claims, **characterised in that** the height "H" of the reinforcing rib (2) is at least 5 mm, preferably 7 mm and particularly preferably up to a maximum of 12 mm.

5. Brake carrier (1) according to any of the preceding claims, **characterised in that** the hub arch (6) having the rib, starting from a symmetry axis, merges in each case outward into a section having an outward-expanding triangular geometry (18), and the outer ends of the reinforcing rib (2) are positioned at least 15 mm, preferably 20 mm and particularly preferably less than 25 mm under a base surface (4) of the disc surround (5) on which the brake carrier horns are formed or to which they are attached.

6. Brake carrier (1) according to any of the preceding claims, **characterised in that** the brake carrier (1) is produced by a casting process.

7. Brake carrier (1) according to any of the preceding claims, **characterised in that** the brake carrier (1) is made from a ductile casting material.

8. Brake carrier (1) according to any of the preceding claims, **characterised in that** the brake carrier (1) is made of cast iron with spheroidal graphite.

## Revendications

1. Support (1) de frein d'une seule pièce - fabriqué de préférence par un procédé de formage - pour un frein à disque d'un véhicule ayant un disque de frein,
a. dans lequel le support (1) de frein a un serrage (5) de disque de type en cadre, qui a à son tour deux arceaux (6) de moyeu, qui sont parallèles entre eux et qui sont alignés parallèlement au disque de frein, et deux parties (17) de cadre reliant ceux-ci parallèlement à un axe (19) de rotation de disque de frein,
b. dans lequel le support (1) de frein a en outre, au moins du côté éloigné de la bride de fixation - rapporté au serrage (5) de disque - vers l'extérieur, une nervure (2) de renfort, qui par rapport à un axe (19) de rotation du disque de frein, est en saillie de l'un des arceaux (6) de moyeu et qui est constituée sous la forme d'un tracé de contour continu,
**caractérisé**
c. **en ce que** la nervure (2) de renfort dépasse au moins du côté, éloigné de la bride de fixation, du support de frein, rapporté à un axe (19) de rotation du disque de frein dans la direction axiale du support de frein et de l'un des arceaux (6) de moyeu, la nervure de renfort (2) en saillie axialement, qui est constituée sous la forme d'un tracé de contour continu, ayant de deux extrémités extérieures à un axe de symétrie médian une courbe croissante, dans lequel
d. les deux extrémités de la nervure (2) de renfort se trouvent aux coins inférieurs extérieurs du support (1) de frein et en ce que la nervure (2) de renfort s'étend à partir de ces extrémités respectivement jusqu'à un point culminant (9) central sur un axe X - Y de symétrie du support (1) de frein où le signe du gradient de croissance du tracé de contour se modifie.

2. Support de frein suivant la revendication 1, **caractérisé en ce qu'**il a deux points (10) d'inflexion, symétriques par rapport à l'axe X - Y de symétrie où le signe du gradient de courbure du tracé de contour se modifie.

3. Support (1) de frein suivant l'une quelconque des revendications précédentes, **caractérisé en ce que** le tracé de contour de la nervure (2) de renfort est symétrique par rapport à l'axe X - Y de symétrie.

4. Support (1) de frein suivant l'une quelconque des revendications précédentes, **caractérisé en ce que** la hauteur « H » de la nervure (2) de renfort est d'au moins 5 mm, de préférence de 7 mm et, d'une manière particulièrement préférée, au maximum allant jusqu'à 12 mm.

5. Support (1) de frein suivant l'une quelconque des revendications précédentes, **caractérisé en ce que** l'arceau (6) de moyeu ayant la nervure se transforme, à partir d'un axe de symétrie vers l'extérieur, respectivement en une partie ayant une géométrie (18) triangulaire s'élargissant vers l'extérieur, les extrémités extérieures de la nervure (2) de renfort se trouvant à au moins 15 mm, de préférence à 20 mm et, d'une manière particulièrement préférée, à moins de 25 mm en dessous d'une surface (4) de base du serrage de disque (5), sur laquelle sont constituées les cornes du porte-frein ou sur laquelle celles-ci sont adjointes.

6. Support (1) de frein suivant l'une quelconque des revendications précédentes, **caractérisé en ce que** le support (1) de frein est fabriqué par un procédé de coulée.

7. Support (1) de frein suivant l'une quelconque des revendications précédentes, **caractérisé en ce que** le support (1) de frein est fabriqué en un matériau de coulée ductile.

8. Support (1) de frein suivant l'une quelconque des revendications précédentes, **caractérisé en ce que** le support (1) de frein est fabriqué en fonte à graphite sphéroïdal.
